# EUROPEAN PATENT SPECIFICATION

(11) **EP 0 713 800 B1**
(45) Date of publication and mention of the grant of the patent: **01.03.2000**
(21) Application number: 95830309.1
(22) Date of filing: 18.07.1995
(51) Int. Cl.: B60N 2/46

(54) **Motor-vehicle rear seat**
Kraftfahrzeugrücksitz
Siège arrière pour véhicules automobiles

(30) Priority: 24.11.1994 IT TO940946
(43) Date of publication of application: 29.05.1996
(73) Proprietor: LEAR CORPORATION ITALIA S.p.A., 10128 Torino (IT)
(72) Inventor: Brambilla, Silvio, I-10095 Grugliasco (Torino) (IT)
(74) Representative: Notaro, Giancarlo

(56) References cited:
- DE-A- 3 322 511
- DE-A- 3 539 258
- PATENT ABSTRACTS OF JAPAN vol. 11, no. 21 (M-555), 21 January 1987 -& JP 61 193949 A (HONDA MOTOR CO LTD), 28 August 1986,

## Description

The present invention relates to a motor-vehicle rear seat, of the type comprising a cushion, a backrest and an armrest articulated around a transverse horizontal axis to a supporting structure at the lower portion of the backrest and movable between an inoperative raised condition, in which said armrest defines a portion of the backrest, and an operative lowered position, in which the armrest uncovers a passage through the backrest, which can be used to receive elongated articles such as skis or similar arranged in the motor-vehicle luggage compartment, wherein:
a) the supporting structure to which the armrest is articulated is constituted by an auxiliary frame including a wall which, when the armrest is raised, is positioned at the rear thereof,
b) said auxiliary frame is articulated on its turn to a main supporting structure, around a transverse horizontal axis, adjacent to the lower portion of the backrest and is movable between a raised position, in which it covers said passage through the backrest, and a lowered position, in which it leaves this passage free,
whereby said backrest is able to assume:
- a first configuration of use, with the armrest and the auxiliary frame both raised,
- a second configuration of use, with the armrest lowered and the auxiliary frame raised, with said wall covering the passage through the backrest, and
- a third configuration of use, with the armrest and the auxiliary frame both lowered, so as to leave the passage through the backrest free.

A seat having these features is known from JP-A-61 193949.

The object of the present invention is that of providing a seat of the above indicated type which can efficiently solve both the problem of mounting a headrest which can be used by a third passenger seated at the center of the seat when the armrest is raised, and the problem of providing the passage through the backrest when the armrest is lowered, to receive elongated articles such as skis or similar arranged in the luggage compartment of the motor-vehicle, as well as the problem of covering this passage if this must not be used, when the armrest is lowered.

In view of solving simultaneously all said problems, with a relatively simple and reliable structure, the invention provides a motor-vehicle rear seat as set forth in Claim 1.

The invention will be now described with reference to the annexed drawings, given purely by way of non limiting example, in which:
figures **1, 2, 3** are diagrammatic perspective views which show the rear backrest of a seat according to the invention in three different operating conditions,
figures **4, 5** are cross-sectional views, at an enlarged scale, taken along lines IV-IV and V-V of figure 2, and
figure **6** is a diagrammatic view in cross section and at an enlarged scale taken along line VI-VI of figure 3.

With reference to the drawings, a rear seat 1 of a motor-vehicle (figure 6) comprises a cushion 2 and a backrest 3. The details of construction of cushion 2 and backrest 3 have not been shown in the annexed drawings, since they may be provided in any known way and do not fall, taken per se, within the scope of the present invention. Furthermore, the deletion of these details from the drawings renders the latter easier to understand.

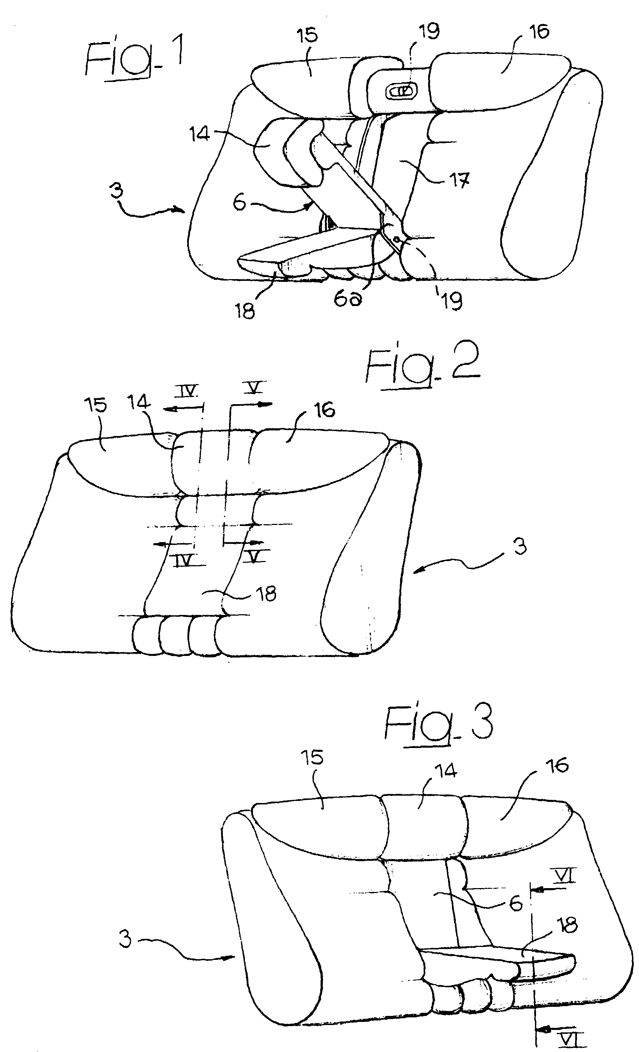

With reference to figure 6, reference numeral 4 designates a lower portion of a sheet-metal frame of the backrest 3 on which there is fixed, at a central portion of the backrest, a support 5 of plastic material. Reference numeral 6 generally designates an auxiliary frame (see also figures 1-3) which is pivotally mounted onto support 5 around a transverse and horizontal axis 7, adjacent to the lower portion of the backrest 3. The auxiliary frame 6 is constituted, in the illustrated example, by a hollow structure of light alloy, configured as a panel, provided at its lower part with two side flanges 6a which are pivotally mounted onto support 5. At its upper end, the auxiliary frame 6 includes a latch mechanism 8 known per se, adapted to cooperate with a striker bolt 9 carried by the backrest 3 to lock the auxiliary frame 6 in its raised position.

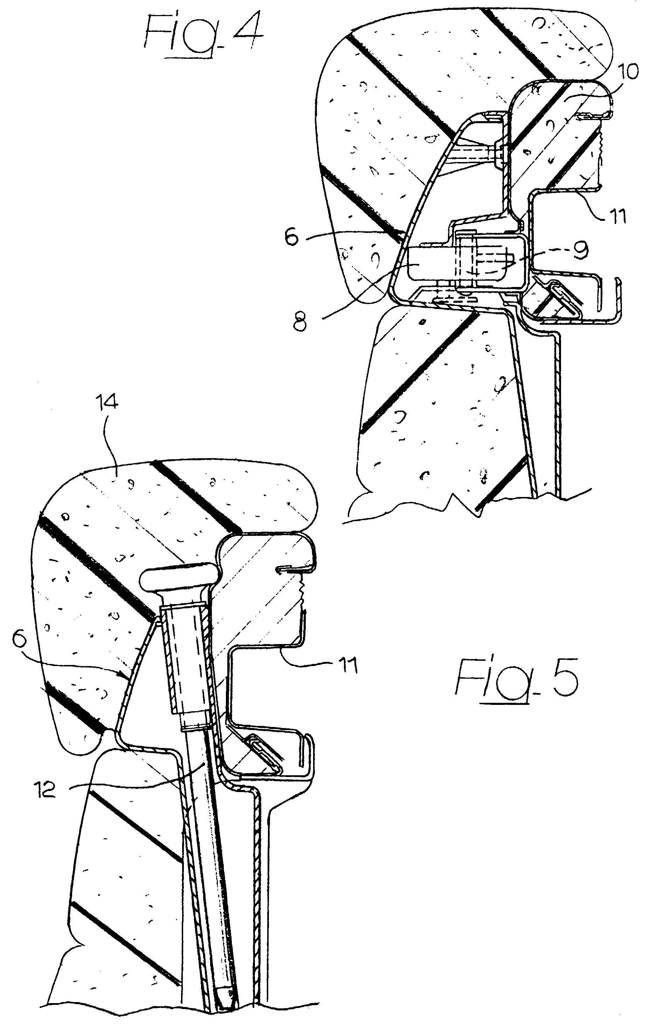

With reference to figure 4, in the illustrated example, the upper portion of the auxiliary frame 6 abuts against a padded portion 10 supported by a cross member 11 of sheet-metal. Cross member 11 has its ends directly fixed to the body of the motor-vehicle or, in a different embodiment, may be a portion of the frame of the backrest of the seat.

Mechanism 8 may be of a type similar to conventional latch mechanisms used for motor vehicle doors and can be opened by conventional means which can be operated by acting on a control lever (not shown in the drawings).

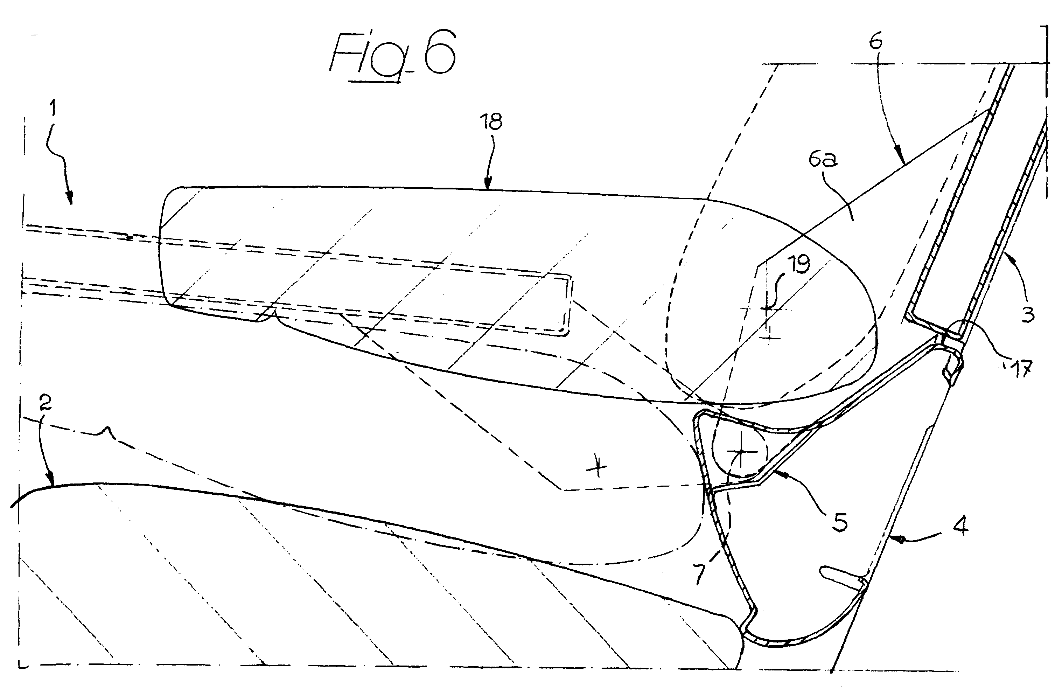

With reference to figure 5, the hollow structure of the upper portion of the auxiliary frame 6 receives the conventional supporting rods 12 (one of which is visible in figure 5) of a central headrest 14 located in an intermediate position between two side headrests 15, 16 (figures 1-3). At the central portion of backrest 3 where the auxiliary frame 6 is mounted, the frame of the backrest defines a free passage 17 (figure 1) which can be used to receive elongated articles such as skis or similar arranged in the luggage compartment of the motor-vehicle.

Reference numeral 18 designates an armrest which is pivotally mounted onto the side flanges 6a of the auxiliary frame 6 around an axis 19. As visible in figure 6, when the auxiliary frame 6 is its raised position, the articulation axis is spaced downwardly from the articulation axis 19 or the armrest 18.

As clearly apparent from figure 1, when the armrest 18 is in its raised position, the panel 6 of the auxiliary frame is located at the rear of the armrest.

Due to the above described structure, the backrest 3 is able to assume three different conditions of use.

In a first condition of use (figure 2) the armrest 18 and the auxiliary frame 6 are both raised. In this condition, the seat may receive three passengers, each being provided with a headrest adjustable in height.

In a second condition of use (figure 3) the armrest 18 is lowered, whereas the auxiliary frame 6 remains in its raised position. In this condition, the backrest may receive two passengers which may be arranged at both sides of the armrest, whereas the passage 17, which must not be used, is covered by panel 6. Since the latter is in its raised position, the central headrest 14 is in its position interposed between the side headrests 15, 16.

In a third condition of use (shown with dotted lines in figure 6) the armrest 18 and frame 6 are both lowered) so that they leave the passage 17 free, to be used to receive elongated articles such as skis or similar arranged in the luggage compartment of the motor-vehicle. With reference to figure 6, the lower location of axis 7 with respect to axis 19 causes the armrest 18, when the auxiliary frame 6 is lowered, to be located at a lower level with respect to that at which it is located in the operative condition shown in figure 3, so as to leave the passage 17 completely free.

Naturally, while the principle of the invention remains the same, the details of construction and the embodiments may widely vary with respect to what has been described and illustrated purely by way of example.

## Claims

1. Motor-vehicle rear seat, comprising a cushion (2), a backrest (3) and an armrest (18) articulated around a transverse horizontal axis (19) to a supporting structure at the lower portion of the backrest (3) and movable between an inoperative raised condition, in which said armrest (18) defines a portion of the backrest (3), and an operative lowered position, in which the armrest (18) uncovers a passage (17) through the backrest (3), which can be used to receive elongated articles such as skis or similar arranged in the luggage compartment of the motor-vehicle,
wherein:
a) the supporting structure to which the armrest (18) is articulated is constituted by an auxiliary frame (6) including a wall which, when the armrest (18) is raised, is positioned at the rear thereof,
b) said auxiliary frame (6) is articulated on its turn to a main supporting structure (5), around a transverse horizontal axis (7), adjacent to the lower portion of the backrest (3) and is movable between a raised position, in which it covers said passage (17) through the backrest (3), and a lowered position, in which it leaves said passage (17) free,
so that said backrest (3) is able to assume:
- a first configuration of use, with the armrest (18) and the auxiliary frame (6) both raised,
- a second configuration of use, with the armrest (18) lowered and the auxiliary frame (6) raised, with said wall covering the passage (17) through the backrest (3), and
- a third configuration of use, with the armrest (18) and the auxiliary frame (6) both lowered, so as to leave said passage (17) through the backrest (3) free,
said seat being characterized in that the backrest (3) is provided with a headrest (14) at the portion of the backrest (3) to which the armrest (18) is associated,
said headrest (14) is mounted onto said auxiliary frame (6),
the articulation axis (7) of the auxiliary frame (6) is spaced downwardly, with reference to the raised position of the auxiliary frame (6), from the articulation axis (19) of the armrest (18).

2. Seat according to claim 1, characterized in that said headrest (14) is mounted onto the auxiliary frame (6) so as to be adjustable in height.

3. Seat according to claim 1, characterized in that the auxiliary frame (6) is provided with quick locking means (8) adapted to cooperate with a striker element (9) carried by the backrest (3) for locking the auxiliary frame (6) in its raised position and means for disengaging said locking means (8).

## Patentansprüche

1. Kraftfahrzeugrücksitz, der ein Polster (2), eine Rückenlehne (3) und eine Armlehne (18) aufweist, die um eine horizontale Querachse (19) an einer Stützkonstruktion an dem unteren Abschnitt der Rückenlehne (3) angelenkt ist und zwischen einer angehobenen Außerbetriebsstellung, bei der die Armlehne (18) einen Teil der Rückenlehne (3) bildet, und einer heruntergeklappten Betriebsposition bewegbar ist, in der die Armlehne (18) einen Durchgang (17) durch die Rückenlehne (3) freigibt, der dazu verwendet werden kann, längliche Gegenstände, wie beispielsweise Skier oder ähnliches, die im Gepäckraum des Kraftfahrzeuges untergebracht sind, aufzunehmen,
wobei:
a) die Stützkonstruktion, an der die Armlehne (18) angelenkt ist, einen Hilfsrahmen (6) mit einer Wand aufweist, die, wenn die Armlehne (18) angehoben ist, sich an ihrer Rückseite befindet,
b) der Hilfsrahmen (6) seinerseits an einer Hauptstützkonstruktion (5) um eine horizontale Querachse (7), die an den unteren Teil der Rückenlehne (3) angrenzt, angelenkt ist und zwischen einer angehobenen Außerbetreibsstellung, in welcher er den Durchgang (17) durch die Rückenlehne (3) bedeckt, und einer heruntergeklappten Betriebsstellung, in welcher er den Durchgang (17) freigibt, bewegbar ist,
so dass die Rückenlehne (3) folgende Konfigurationen annehmen kann:
- eine erste Verwendungskonfiguration, bei der sowohl die Armlehne (18) als auch der Hilfsrahmen (6) angehoben sind,
- eine zweite Verwendungskonfiguration, bei der die Armlehne (18) heruntergeklappt und der Hilfsrahmen (6) angehoben ist, wobei die Wand den Durchgang (17) durch die Rückenlehne (3) bedeckt,
- eine dritte Verwendungskonfiguration, bei der sowohl die Armlehne (18) als auch der Hilfrahmen (6) heruntergeklappt sind, so dass der Durchgang (17) durch die Rückenlehne (3) frei bleibt,
wobei der Sitz dadurch gekennzeichnet ist, dass die Rückenlehne (3) mit einer Kopfstütze (14) an dem Teil der Rückenlehne (3) ausgerüstet ist, zu dem die Armlehne (18) gehört,
die Kopfstütze (14) an dem Hilfsrahmen (6) angebracht ist,
die Gelenkachse (7) des Hilfsrahmens (6) in der angehobenen Außerbetriebsstellung des Hilfsrahmens (6) von der Gelenkachse (19) der Armlehne (18) nach unten beabstandet ist.

2. Sitz nach Anspruch 1, dadurch gekennzeichnet, dass die Kopfstütze (14) auf dem Hilfsrahmen (6) so angebracht ist, dass sie höhenverstellbar ist.

3. Sitz nach Anspruch 1, dadurch gekennzeichnet, dass der Hilfsrahmen (6) mit Schnelleinrastmitteln (8), die mit einem von der Rückenlehne (3) getragenen Einrastelement (9) zusammenwirken, um den Hilfsrahmen (6) in seiner angehobenen Außerbetriebsstellung zu verriegeln, und mit Mitteln zum Entriegeln der Einrastmittel (8) ausgestattet ist.

## Revendications

1. Siège arrière pour véhicule à moteur, comprenant un coussin (2), un dossier (3) et un accoudoir (18) articulé autour d'un axe horizontal transversal (19) sur une structure de support à la partie inférieure du dossier (3) et mobile entre un état levé de repos dans lequel l'accoudoir (18) délimite une partie du dossier (3), et une position baissée de fonctionnement dans laquelle l'accoudoir (18) dégage un passage (17) formé dans le dossier (3) et qui peut être utilisé pour le logement d'articles allongés tels que des skis ou analogue, placés dans le compartiment du véhicule à moteur,
dans lequel :
a) la structure de support sur laquelle est articulé l'accoudoir (18) est constituée par un châssis auxiliaire (6) qui possède une paroi qui, lorsque l'accoudoir (18) est levé, se trouve à l'arrière de celui-ci, et
b) le châssis auxiliaire (6) est articulé à son tour sur une structure principale de support (5), autour d'un axe horizontal transversal (7) adjacent à la partie inférieure du dossier (3), et est mobile entre une position levée dans laquelle il couvre le passage (17) formé dans le dossier (3), et une position baissée dans laquelle il laisse le passage (17) dégagé,
si bien que le dossier (3) peut prendre :
une première configuration d'utilisation dans laquelle l'accoudoir (18) et le châssis auxiliaire (6) sont tous deux levés,
une seconde configuration d'utilisation dans laquelle l'accoudoir (18) est baissé et le châssis auxiliaire (6) est levé, la paroi recouvrant le passage (17) formé dans le dossier (3), et
une troisième configuration d'utilisation dans laquelle l'accoudoir (18) et le châssis auxiliaire (6) sont tous deux baissés, si bien qu'ils laissent dégagé le passage (17) formé dans le dossier (3),
le siège étant caractérisé en ce que le dossier (3) possède un appuie-tête (14) dans la partie du dossier (3) à laquelle est associé l'accoudoir (18),
l'appuie-tête (14) est monté sur le châssis auxiliaire (6), et
l'axe de l'articulation (7) du châssis auxiliaire (6) est placé à distance au-dessous de l'axe d'articulation (19) de l'accoudoir (18) pour la position levée du châssis auxiliaire (6).

2. Siège selon la revendication 1, caractérisé en ce que l'appuie-tête (14) est monté sur le châssis auxiliaire (6) afin que sa hauteur soit réglable.

3. Siège selon la revendication 1, caractérisé en ce que le châssis auxiliaire (6) possède un dispositif de blocage rapide (8) destiné à coopérer avec un élément de retenue (9) porté par le dossier (3) afin que le châssis auxiliaire (6) soit bloqué en position levée, et un dispositif de dégagement du dispositif de blocage (8).
